(19) Europäisches Patentamt / European Patent Office / Office européen des brevets

(11) **EP 1 427 128 B1**

(12) **EUROPEAN PATENT SPECIFICATION**

(45) Date of publication and mention of the grant of the patent:
**31.01.2007 Bulletin 2007/05**

(51) Int Cl.:
*H04L 1/18* (2006.01)     *H04L 27/34* (2006.01)

(21) Application number: **04001471.4**

(22) Date of filing: **21.02.2001**

(54) **Hybrid ARQ method with signal constellation rearrangement**

Hybrides ARQ-Verfahren mit Neuanordnung der Signalkonstellation

Procédé ARQ hybride avec réarrangement de la constellation de signaux

(84) Designated Contracting States:
**AT BE CH CY DE DK ES FI FR GB GR IE IT LI LU MC NL PT SE TR**

(43) Date of publication of application:
**09.06.2004 Bulletin 2004/24**

(60) Divisional application:
**06021982.1**

(62) Document number(s) of the earlier application(s) in accordance with Art. 76 EPC:
**01923594.4 / 1 293 059**

(73) Proprietor: **MATSUSHITA ELECTRIC INDUSTRIAL CO., LTD.**
**Kadoma-shi, Osaka 571-8501 (JP)**

(72) Inventors:
• **Golitschek Edler von Elbwart, Alexander**
  **64285 Darmstadt (DE)**
• **Wengerter, Christian**
  **63924 Kleinheubach (DE)**
• **Schmitt, Michael Philipp**
  **85221 Dachau (DE)**
• **Seidel, Eiko**
  **64285 Darmstadt (DE)**

(74) Representative: **Grünecker, Kinkeldey, Stockmair & Schwanhäusser Anwaltssozietät Maximilianstrasse 58 80538 München (DE)**

(56) References cited:
**EP-A- 0 938 207     US-A- 6 138 260**

EP 1 427 128 B1

**Description**

The present invention relates to a hybrid ARQ retransmission method in a communication system.

A common technique in communication systems with unreliable and time-varying channel conditions is to correct errors based on automatic repeat request (ARQ) schemes together with a forward error correction (FEC) technique called hybrid ARQ (HARQ). If an error is detected by a commonly used cyclic redundancy check (CRC), the receiver of the communication system requests the transmitter to resend the erroneously received data packets.

S. Kallel, *Analysis of a type II hybrid ARQ scheme with code combining,* IEEE Transactions on Communications, Vol.38, No. 8, August 1990 and S. Kallel, R. Link, S. Bakhtiyari, *Throughput performance of Memory ARQ schemes,* IEEE Transactions on Vehicular Technology, Vol.48, No. 3, May 1999 define three different types of ARQ schemes:

■ Type I: The erroneous received packets are discarded and a new copy of the same packet is retransmitted and decoded separately. There is no combining of earlier and later received versions of that packet.

■ Type II: The erroneous received packets are not discarded, but are combined with some incremental redundancy bits provided by the transmitter for subsequent decoding. Retransmitted packets sometimes have higher coding rates and are combined at the receiver with the stored values. That means that only little redundancy is added in each retransmission.

■ Type III: Is the same as Type II with the constraint each retransmitted packet is now self-decodable. This implies that the transmitted packet is decodable without the combination with previous packets. This is useful if some packets are damaged in such a way that almost no information is reusable.

Types II and III schemes are obviously more intelligent and show a performance gain with respect to Type I, because they provide the ability to reuse information from of previously received erroneous packets. There exist basically three schemes of reusing the redundancy of previously transmitted packets:

■ Soft-Combining
■ Code-Combining
■ Combination of Soft- and Code-Combining

Soft-Combining

Employing soft-combining the retransmission packets carry identical symbols compared with the previously received symbols. In this case the multiple received packets are combined either by a symbol-by-symbol or by a bit-by-bit basis as for example disclosed in D. Chase, *Code combining: A maximum-likelihood decoding approach for combining an arbitrary number of noisy packets,* IEEE Trans. Commun., Vol. COM-33, pp. 385-393, May 1985 or B.A. Harvey and S. Wicker, *Packet Combining Systems based on the Viterbi Decoder,* IEEE Transactions on Communications, Vol. 42, No. 2/3/4, April 1994. By combining this soft-decision values from all received packets the reliabilities of the transmitted bits will increase linearly with the number and power of received packets. From a decoder point of view the same FEC scheme (with constant code rate) will be employed over all transmissions. Hence, the decoder does not need to know how many retransmissions have been performed, since it sees only the combined soft-decision values. In this scheme all transmitted packets will have to carry the same number of symbols.

Code-Combining

Code-combining concatenates the received packets in order to generate a new code word (decreasing code rate with increasing number of transmission). Hence, the decoder has to be aware of the FEC scheme to apply at each retransmission instant. Code-combining offers a higher flexibility with respect to soft-combining, since the length of the retransmitted packets can be altered to adapt to channel conditions. However, this requires more signaling data to be transmitted with respect to soft-combining.

Combination of Soft- and Code-Combining

In case the retransmitted packets carry some symbols identical to previously transmitted symbols and some code-symbols different from these, the identical code-symbols are combined using soft-combing as described in the section titled "Soft Combining" while the remaining code-symbols will be combined using code-combining. Here, the signaling requirements will be similar to code-combining.

As it has been shown in M.P. Schmitt, *Hybrid ARQ Scheme employing TCM and Packet Combining,* Electronics Letters Vol. 34, No. 18, September 1998 that HARQ performance for Trellis Coded Modulation (TCM) can be enhanced by rearranging the symbol constellation for the retransmissions. There, the performance gain results from the maximizing the Euclidean distances between the mapped symbols over the retransmissions, because the rearrangement has been performed on a symbol basis.

Considering high-order modulation schemes (with modulation symbols carrying more than two bits) the combining methods employing soft-combining have a major drawback: The bit reliabilities within soft-combined symbols will be in a constant ratio over all retransmissions, i.e. bits which have been less reliable from previous received transmissions will still be less reliable after having received further transmissions and, analogous, bits which have been more reliable from previous received transmissions will still be more reliable after having received further transmissions.

The varying bit reliabilities evolve from the constraint of two-dimensional signal constellation mapping, where modulation schemes carrying more than 2 bits per symbol cannot have the same mean reliabilities for all bits under the assumption that all symbols are transmitted equally likely. The term mean reliabilities is consequently meant as the reliability of a particular bit over all symbols of a signal constellation.

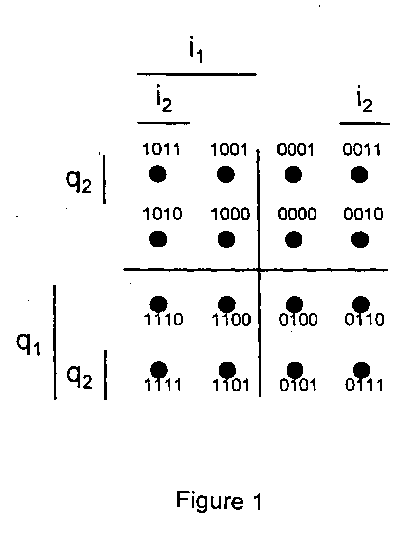

Employing a signal constellation for a 16 QAM modulation scheme according to Figure 1 showing a Gray encoded signal constellation with a given bit-mapping order $i_1 q_1 i_2 q_2$, the bits mapped onto the symbols differ from each other in mean reliability in the first transmission of the packet. In more detail, bits $i_1$ and $q_1$ have a high mean reliability, as these bits are mapped to half spaces of the signal constellation diagram with the consequences that their reliability is independent from the fact of whether the bit transmits a *one* or a *zero*.

In contrast thereto, bits $i_2$ and $q_2$ have a low mean reliability, as their reliability depends on the fact of whether they transmit a *one* or a *zero*. For example, for bit $i_2$, ones are mapped to outer columns, whereas zeros are mapped to inner columns. Similarly, for bit $q_2$, ones are mapped to outer rows, whereas zeros are mapped to inner rows.

For the second and each further retransmissions the bit reliabilities will stay in a constant ratio to each other, which is defined by the signal constellation employed in the first transmission, i.e. bits $i_i$ and $q_1$ will always have a higher mean reliability than bits $i_2$ and $q_2$ after any number of retransmissions.

EP-A-0 938 207 discloses a transmission apparatus according to the preamble portion of claims 1 and 2.

The object underlying the present invention is to provide a hybrid ARQ retransmission apparatus and method with an improved error correction performance. This object is solved by an apparatus and method as set forth in the independent claims.

The method subject to the invention is based on the recognition that in order to enhance the decoder performance, it would be quite beneficial to have equal or near to equal mean bit reliabilities after each received transmission of a packet. Hence, the idea underlying the invention is to tailor the bit reliabilities over the retransmissions in a way that the mean bit reliabilities get averaged out. This is achieved by choosing a predetermined first and at least second signal constellation for the transmissions, such that the combined mean bit reliabilities for the respective bits of all transmissions are nearly equal.

Hence, the signal constellation rearrangement results in a changed bit mapping, wherein the Euclidean distances between the modulation symbols can be altered from retransmission to retransmission due to the movement of the constellation points. As a result, the mean bit reliabilities can be manipulated in a desired manner and averaged out to increase the performance the FEC decoder at the receiver.

For a more in depth understanding of the present invention, preferred embodiments will be described in the following with reference to the accompanying drawings.

Figure 1 is an exemplary signal constellation for illustrating a 16 QAM modulation scheme with Gray encoded bit symbols,

figure 2 shows four examples for signal constellations for a 16 QAM modulation scheme with Gray encoded bit symbols,

figure 3 shows an exemplary signal constellation for 64-QAM Gray encoded bit symbols,

figure 4 shows six exemplary signal constellations for 64-QAM Gray encoded bit symbols

figure 5 is an exemplary embodiment of a communication system in which the method underlying the invention is employed, and

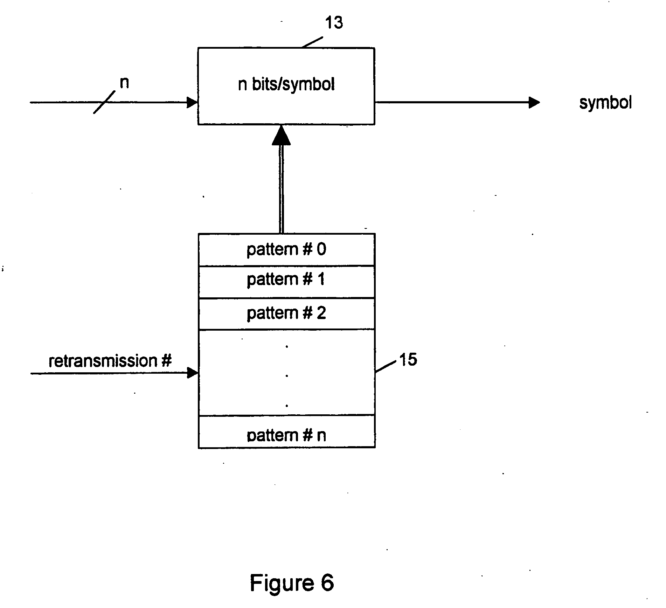

figure 6 explains details of the mapping unit shown in figure 5.

For a better understanding of the embodiments, in the following the concept of a Log-Likelihood-Ratio (*LLR*) will be described as a metric for the bit reliabilities. First the straight forward calculation of the bit *LLR*s within the mapped symbols for a single transmission will be shown. Then the *LLR* calculation will be extended to the multiple transmission case.

Single Transmission

The mean *LLR* of the *i*-th bit $b_n^i$ under the constraint that symbol $s_n$ has been transmitted for a transmission over a channel with additive white gaussian noise (AWGN) and equally likely symbols yields

$$LLR_{b_n^i|r_n}(r_n) = \log\left[\sum_{(m|b_m^i=b_n^i)} e^{-\frac{E_s}{N_0} \cdot d_{n,m}^2}\right] - \log\left[\sum_{(m|b_m^i \neq b_n^i)} e^{-\frac{E_s}{N_0} \cdot d_{n,m}^2}\right], \quad (1)$$

where $r_n = s_n$ denotes the mean received symbol under the constraint the symbol $s_n$ has been transmitted (AWGN case), $d_{n,m}^2$ denotes the square of the Euclidean distance between the received symbol $r_n$ and the symbol $s_m$, and $E_s/N_o$ denotes the observed signal-to-noise ratio.

It can be seen from Equation (1) that the *LLR* depends on the signal-to-noise ratio $E_s/N_0$ and the Euclidean distances $d_{n,m}$ between the signal constellation points.

Multiple Transmissions

Considering multiple transmissions the mean *LLR* after the *k*-th transmission of the *i*-th bit $b_n^i$ under the constraint that symbols $s_n^{(j)}$ have been transmitted over independent AWGN channels and equally likely symbols yields

$$LLR_{b_n^i|I_{j=1}^k r_n^{(j)}}\left(r_n^{(1)}, r_n^{(2)}, \ldots, r_n^{(k)}\right) = \log\left[\sum_{(m|b_m^i=b_n^i)} e^{-\sum_{j=1}^k \left(\frac{E_s}{N_0}\right)^{(j)} \cdot \left(d_{n,m}^{(j)}\right)^2}\right] - \log\left[\sum_{(m|b_m^i \neq b_n^i)} e^{-\sum_{j=1}^k \left(\frac{E_s}{N_0}\right)^{(j)} \cdot \left(d_{n,m}^{(j)}\right)^2}\right], \quad (2)$$

where *j* denotes the *j*-th transmission ((*j* - 1)-th retransmission). Analogous to the single transmission case the mean *LLR*s depend on the signal-to-noise ratios and the Euclidean distances at each transmission time.

If no constellation rearrangement is performed the Euclidean distances $d_{n,m}^{(j)} = d_{n,m}^{(1)}$ are constant for all transmissions and, hence, the bit reliabilities (*LLR*s) after *k* transmissions will be defined by the observed signal-to-noise ratio at each transmission time and the signal constellation points from the first transmission. For higher level modulation schemes (more than 2 bits per symbol) this results in varying mean *LLR*s for the bits, which in turn leads to different mean bit reliabilities. The differences in mean reliabilities remain over all retransmissions and lead to a degradation in decoder performance.

**16-QAM Strategy**

In the following, the case of a 16-QAM system will be exemplarily considered resulting in 2 high reliable and 2 low reliable bits, where for the low reliable bits the reliability depends on transmitting a *one* or a *zero* (see Figure 1). Hence, overall there exist 3 levels of reliabilities.

**Level 1** (High Reliability, 2 bits): Bit mapping for *ones* (*zeros*) separated into the positive (negative) real half space for the i-bits and the imaginary half space the q-bits. Here, there is no difference whether the *ones* are mapped to the positive or to the negative half space.

**Level 2** (Low Reliability, 2 bits): *Ones* (*zeros*) are mapped to inner (outer) columns for the i-bits or to inner (outer) rows for the q-bits. Since there is a difference for the *LLR* depending on the mapping to the inner (outer) columns and rows, Level 2 is further classified:

**Level 2a:** Mapping of in to inner columns and $q_n$ to inner rows respectively.

**Level 2b:** Inverted mapping of Level 2a: Mapping of $i_n$ to outer columns and $q_n$ to outer rows respectively.

To ensure an optimal averaging process over the transmissions for all bits the levels of reliabilities have to be altered by changing the signal constellations according to the algorithms given in the following section.

It has to be considered that the bit-mapping order is open prior initial transmission, but has to remain through retransmissions, e.g. bit-mapping for initial transmission: $i_1 q_1 i_2 q_2 \Rightarrow$ bit-mapping all retransmissions: $i_1 q_1 i_2 q_2$.

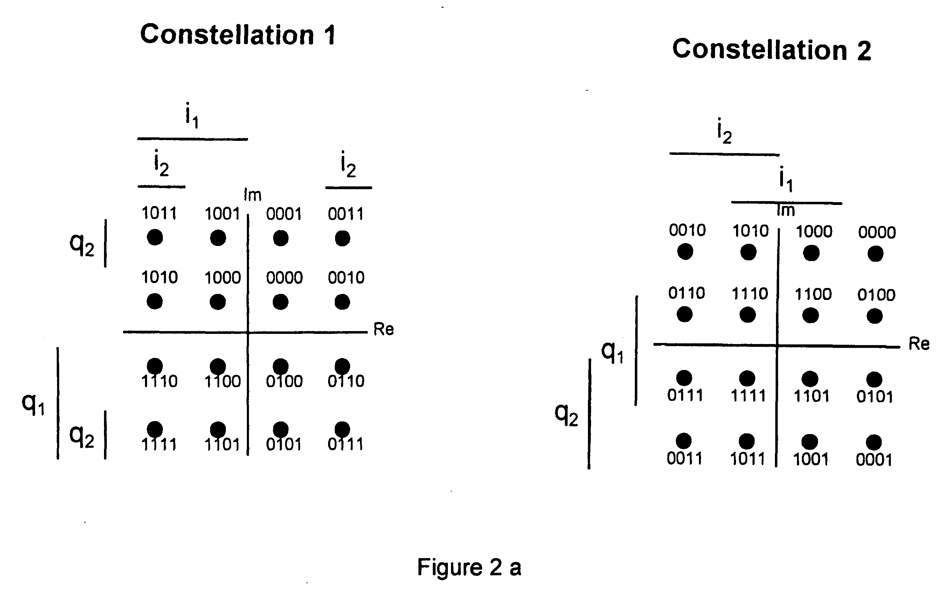

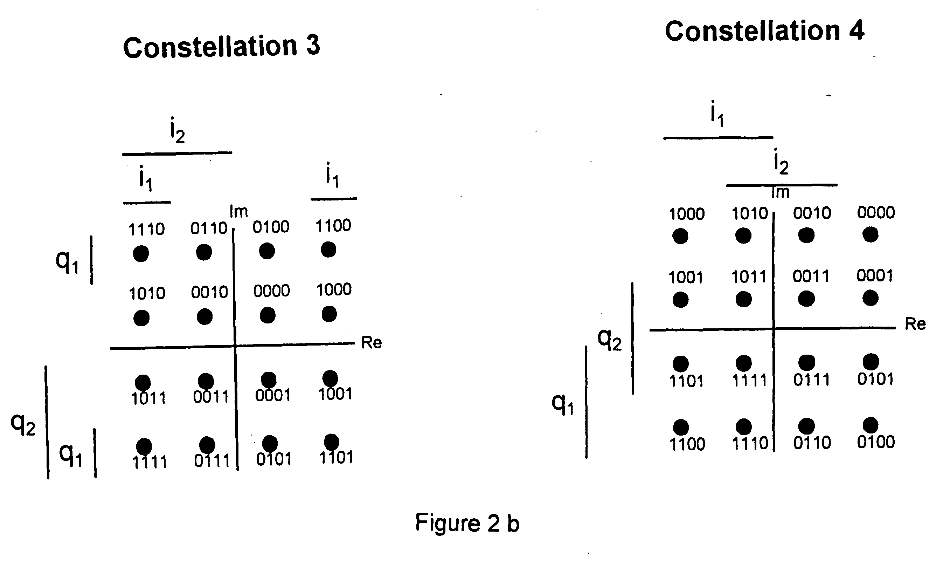

For the actual system implementation there are a number of possible signal constellations to achieve the averaging process over the retransmissions. Some examples for possible constellations are shown in Figure 2. The resulting bit reliabilities according to Figure 2 are given in Table 1.

| Constella-tion | bit $i_1$ | bit $q_1$ | bit $i_2$ | bit $q_2$ |
|---|---|---|---|---|
| 1 | High Reliability (Level 1) | High Reliability (Level 1) | Low Reliability (Level 2b) | Low Reliability (Level 2b) |
| 2 | Low Reliability (Level 2a) | Low Reliability (Level 2a) | High Reliability (Level 1) | High Reliability (Level 1) |
| 3 | Low Reliability (Level 2b) | Low Reliability (Level 2b) | High Reliability (Level 1) | High Reliability (Level 1) |
| 4 | High Reliability (Level 1) | High Reliability (Level 1) | Low Reliability (Level 2a) | Low Reliability (Level 2a) |

Table 1.      Bit reliabilities for 16-QAM according to signal constellations shown in Figure 2

Moreover, Table 2 provides some examples how to combine the constellations for the transmissions 1 to 4 (using 4 different mappings).

Table 2. Examples for Constellation Rearrangement strategies for 16-QAM (using 4 mappings) with signal constellations according to Figure 2 and bit reliabilities according to Table 1.

| Transmission No. | Scheme 1 (with Constellations) | Scheme 2 (with Constellations) | Scheme 3 (with Constellations) | Scheme 4 (with Constellations) |
|---|---|---|---|---|
| 1 | 1 | 1 | 1 | 1 |
| 2 | 2 | 2 | 3 | 3 |
| 3 | 3 | 4 | 2 | 4 |
| 4 | 4 | 3 | 4 | 2 |

Two algorithms are given which describe schemes using 2 or 4 mappings overall. The approach using 2 mappings results in less system complexity, however has some performance degradation with respect to the approach using 4 mappings. The mapping for i- and q-bits can be done independently and, hence, in the following the mapping for the i-bits only is described. The algorithms for the q-bits work analog.

**16-QAM Algorithms**

A. Using 2 Mappings

1. Step (1. Transmission)
Choose Level 1 for $i_1 \Rightarrow$ Level 2 for $i_2$ - free choice if 2a or 2b

$\Rightarrow$ **1. Mapping defined**
2. Step (2. Transmission)
Choose Level 1 for $i_2$ $\Rightarrow$ Level 2 for $i_1$ - free choice if 2a or 2b
$\Rightarrow$ **2. Mapping defined**
3. Step
Options:

    (a) Go to 1. Step and proceed with alternating between 1. and 2. Mapping
    (b) Use 2. Mapping and proceed with using 2 times 1. Mapping, 2 times 2. Mapping and so on ...

B. Using 4 Mappings

1. Step (1. Transmission)
Choose Level 1 for $i_1$ $\Rightarrow$ Level 2 for $i_2$ - free choice if 2a or 2b
$\Rightarrow$ **1. Mapping defined**

2. Step (2. Transmission)
Choose Level 1 for $i_2$ $\Rightarrow$ Level 2 for $i_1$ - free choice if 2a or 2b
$\Rightarrow$ **2. Mapping defined**

3. Step (3. Transmission)
Options:

    (a) Choose Level 1 for $i_1$ $\Rightarrow$ Level 2 for $i_2$ with following options

        (a1) if in 1. Transmission 2a was used then use 2b
        (a2) if in 1. Transmission 2b was used then use 2a

    (b) Choose Level 1 for $i_2$ $\Rightarrow$ Level 2 for $i_1$ with following options

        (b1) if in 2. Transmission 2a was used then use 2b
        (b2) if in 2. Transmission 2b was used then use 2a

    $\Rightarrow$ **3. Mapping defined**

4. Step (4. Transmission)
if option (a) in 3. Step
Choose Level 1 for $i_2$ $\Rightarrow$ Level 2 for $i_1$ with following options

    (a1) if in 2. Transmission 2a was used then use 2b
    (a2) if in 2. Transmission 2b was used then use 2a

if option (b) in 3. Step
Choose Level 1 for $i_1$ $\Rightarrow$ Level 2 for $i_2$ with following options

    (a1) if in 1. Transmission 2a was used then use 2b
    (a2) if in 1. Transmission 2b was used then use 2a

    $\Rightarrow$ **4. Mapping defined**

5. Step (5., 9., 13., ... Transmission)
Choose one out of 4 defined mappings

6. Step (6., 10., 14., ... Transmission)
Choose one out of 4 defined mappings except

    (a) the mapping used in 5. Step (previous transmission)
    (b) the mapping giving Level 1 reliability to the same bit as in previous transmission

7. Step (7., 11., 15., ... Transmission)
Choose one out of 2 remaining mappings not used in last 2 transmissions

8. Step (8., 12., 16., ... Transmission)
Choose mapping not used in last 3 transmissions

9. Step
Go to 5. Step

**64-QAM Strategy**

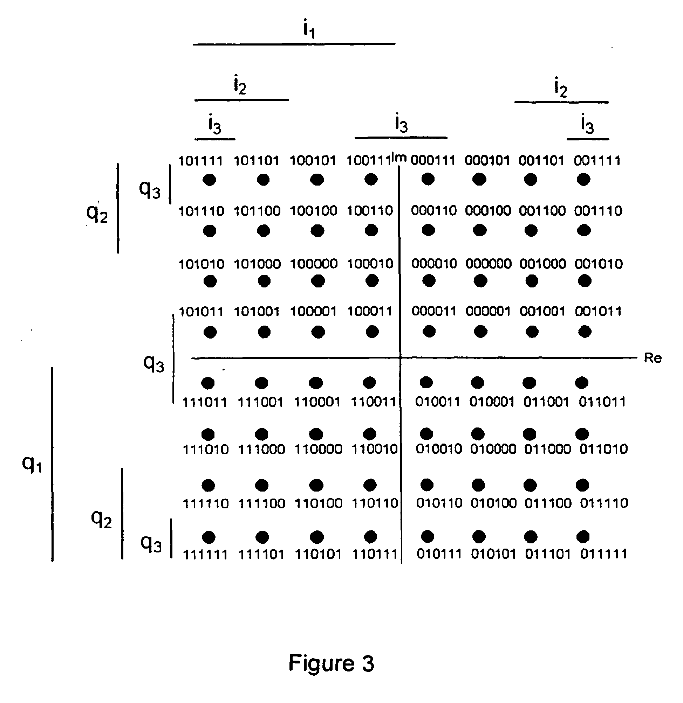

In case of a 64-QAM system there will be 2 high reliable, 2 medium reliable and 2 low reliable bits, where for the low and medium reliable bits the reliability depends on transmitting a *one* or a *zero* (see Figure 3). Hence, overall there exist 5 levels of reliabilities.

**Level 1** (High Reliability, 2 bits): Bit mapping for *ones* (*zeros*) separated into the positive (negative) real half space for the i-bits and the imaginary half space for the q-bits. Here, there is no difference whether the *ones* are mapped to the positive or to the negative half space.

**Level 2** (Medium Reliability, 2 bits): *Ones* (*zeros*) are mapped to 4 inner and 2x2 outer columns for the i-bits or to 4 inner and 2x2 outer rows for the q-bits. Since there is a difference for the *LLR* depending on the mapping to the inner or outer column/row Level 2 is further classified:

**Level 2a:** Mapping of $i_n$ to 4 inner columns and $q_n$ to 4 inner rows respectively.

**Level 2b:** Inverted mapping of 2a: $i_n$ to outer columns and $q_n$ to outer rows respectively

**Level 3** (Low Reliability, 2 bits): *Ones* (*zeros*) are mapped to columns 1-4-5-8/2-3-6-7 for the i-bits or to rows 1-4-5-8/2-3-6-7 for the q-bits. Since there is a difference for the *LLR* depending on the mapping to columns/rows 1-4-5-8 or 2-3-6-7 Level 3 is further classified:

**Level 3a:** Mapping of $i_n$ to columns 2-3-6-7 and $q_n$ to rows 2-3-6-7 respectively

**Level 3b:** Inverted mapping of 2a: $i_n$ to columns 1-4-5-8 and $q_n$ to rows 1-4-5-8 respectively

To ensure an optimal averaging process over the transmissions for all bits the levels of reliabilities have to be altered by changing the signal constellations according to the algorithms given in the following section.

It has to be considered that the bit-mapping order is open prior initial transmission, but has to remain through retransmissions, e.g. bit-mapping for initial transmission: $i_1 q_1 i_2 q_2\, i_3 q_3 \Rightarrow$ bit-mapping all retransmissions: $i_1 q_1 i_2 q_2\, i_3 q_3$.

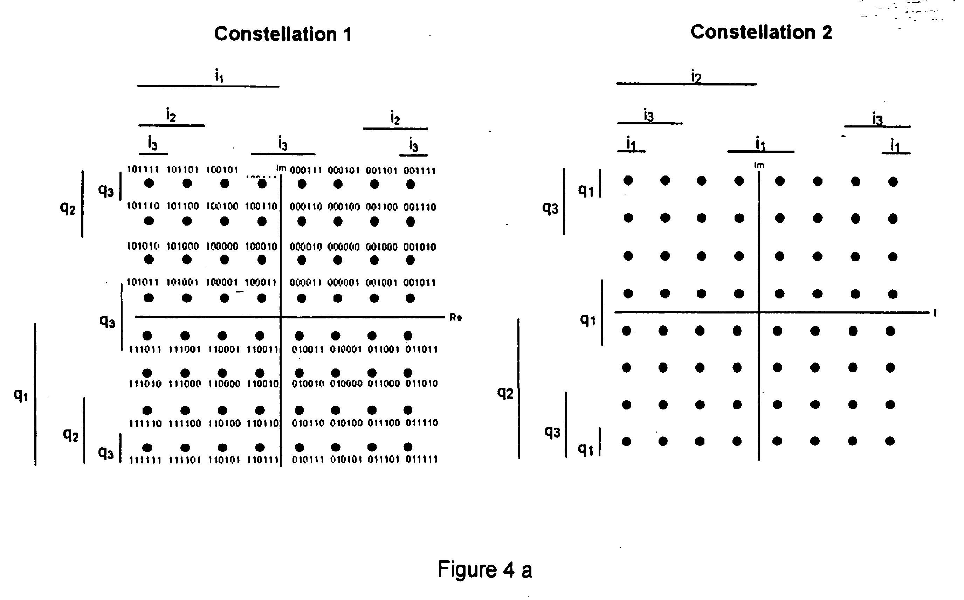

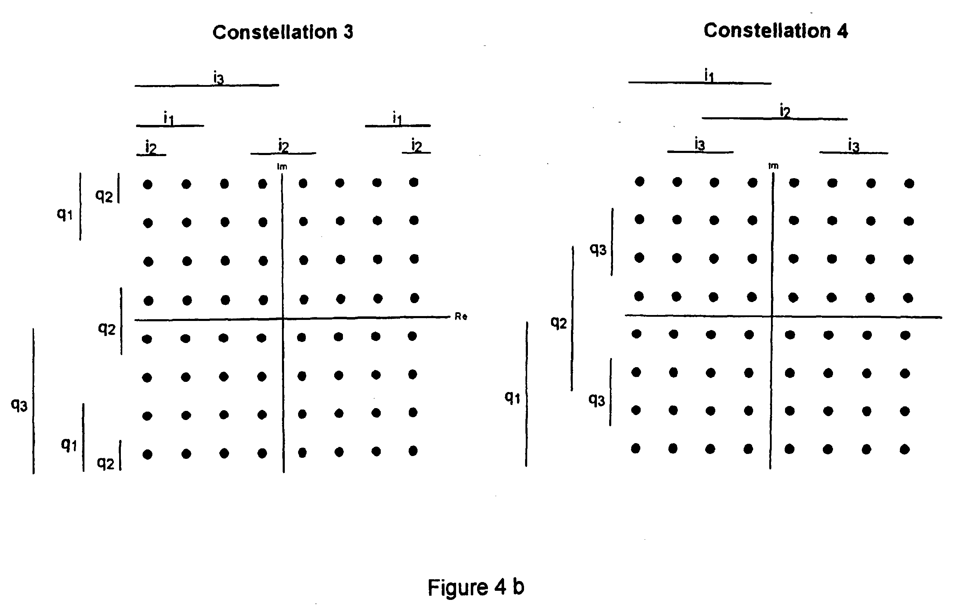

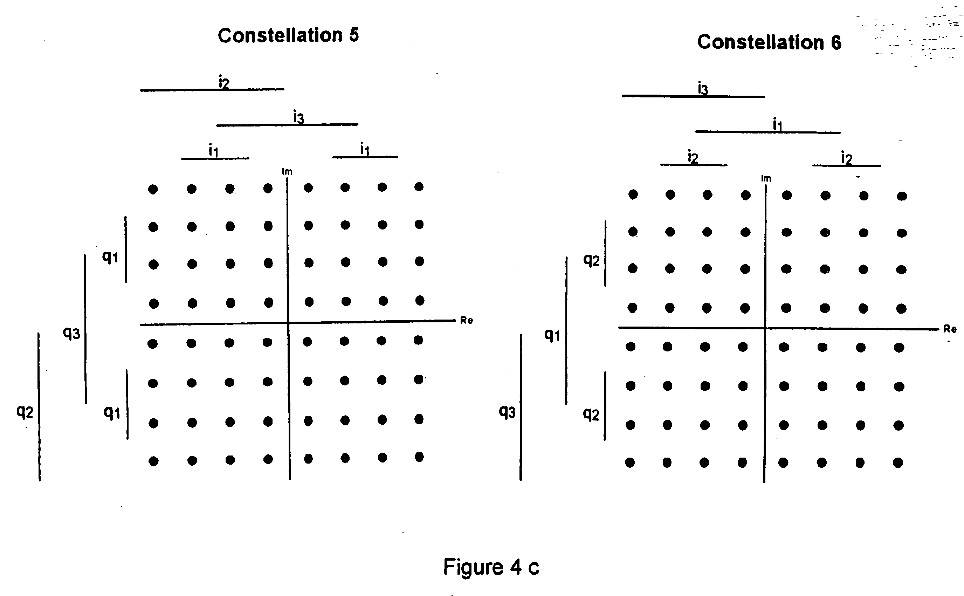

Analog to 16-QAM for the actual system implementation there are a number of possible signal constellations to achieve the averaging process over the retransmissions. Some examples for possible constellations are shown in Figure 4. The resulting bit reliabilities according to Figure 4 are given in Table 3.

| Constel-lation | bit $i_1$ | bit $q_1$ | bit $i_2$ | bit $q_2$ | bit $i_3$ | bit $q_3$ |
|---|---|---|---|---|---|---|
| 1 | High Reliability (Level 1) | High Reliability (Level 1) | Middle Reliability (Level 2b) | Middle Reliability (Level 2b) | Low Reliability (Level 3b) | Low Reliability (Level 3b) |
| 2 | Low Reliability (Level 3b) | Low Reliability (Level 3b) | High Reliability (Level 1) | High Reliability (Level 1) | Middle Reliability (Level 2b) | Middle Reliability (Level 2b) |
| 3 | Middle Reliability (Level 2b) | Middle Reliability (Level 2b) | Low Reliability (Level 3b) | Low Reliability (Level 3b) | High Reliability (Level 1) | High Reliability (Level 1) |
| 4 | High Reliability (Level 1) | High Reliability (Level 1) | Middle Reliability (Level 2a) | Middle Reliability (Level 2a) | Low Reliability (Level 3a) | Low Reliability (Level 3a) |
| 5 | Low Reliability (Level 3a) | Low Reliability (Level 3a) | High Reliability (Level 1) | High Reliability (Level 1) | Middle Reliability (Level 2a) | Middle Reliability (Level 2a) |
| 6 | Middle Reliability (Level 2a) | Middle Reliability (Level 2a) | Low Reliability (Level 3a) | Low Reliability (Level 3a) | High Reliability (Level 1) | High Reliability (Level 1) |

Table 3. Bit reliabilities for 64-QAM according to signal constellations shown in Figure 4.

Moreover, Table 4 provides some examples how to combine the constellations for the transmissions 1 to 6 (using 6 different mappings).

Table 4. Examples for Constellation Rearrangement strategies for 64-QAM (using 6 mappings) with signal constellations according to Figure 4 and bit reliabilities according to Table 3.

| Transmission No. | Scheme 1 (with Constellations) | Scheme 2 (with Constellations) | Scheme 3 (with Constellations) | Scheme 4 (with Constellations) |
|---|---|---|---|---|
| 1 | 1 | 1 | 1 | 1 |
| 2 | 2 | 3 | 5 | 3 |
| 3 | 3 | 2 | 6 | 2 |
| 4 | 4 | 4 | 4 | 6 |
| 5 | 5 | 5 | 2 | 5 |
| 6 | 6 | 6 | 3 | 4 |

Two algorithms are given which describe schemes using 3 or 6 mappings overall. The approach using 3 mappings results in less system complexity, however has some performance degradation with respect to the approach using 6 mappings.

The mapping for i- and q-bits can be done independently and, hence, in the following the mapping for the i-bits only is described. The algorithms for the q-bits work analog.

**64-QAM Algorithms**

A. Using 3 Mappings

1. Step (1. Transmission)

1. Step (1. Transmission)

Choose Level 1 for $i_1$
Choose Level 2 for $i_2$ (free choice if 2a or 2b) => Level 3 for $i_3$ - free choice if 3a or 3b
$\Rightarrow$ **1. Mapping defined**

2. Step (2. Transmission)
Options:

    (a) Choose Level 1 for $i_2$
    Choose Level 2 for $i_3$ (free choice if 2a or 2b) $\Rightarrow$ Level 3 for $i_1$ - free choice if 3a or 3b
    (b) Choose Level 1 for $i_3$
    Choose Level 2 for $i_1$ (free choice if 2a or 2b) $\Rightarrow$ Level 3 for $i_2$ - free choice if 3a or 3b

$\Rightarrow$ **2. Mapping defined**

3. Step (3. Transmission)
if (a) in 2. Step
Choose Level 1 for $i_3$
Choose Level 2 for $i_1$ (free choice if 2a or 2b) $\Rightarrow$ Level 3 for $i_2$ - free choice if 3a or 3b if (b) in 2. Step
Choose Level 1 for $i_2$
Choose Level 2 for $i_3$ (free choice if 2a or 2b) $\Rightarrow$ Level 3 for $i_1$ - free choice if 3a or 3b
$\Rightarrow$ **3. Mapping defined**

4. Step (4., 7., 10, ... Transmission)
Choose one out of 3 defined mappings

5. Step (5., 8., 11, ... Transmission)
Choose one out of 3 defined mappings except the mapping used in previous transmission

6. Step (6., 9., 12, ... Transmission)
Choose one out of 3 defined mappings except the mapping used in last 2 transmissions

7. Step
Go to 4. Step

B. Using 6 Mappings

1. Step (1. Transmission)
Choose Level 1 for $i_1$
Choose Level 2 for $i_2$ (free choice if 2a or 2b) $\Rightarrow$ Level 3 for $i_3$ - free choice if 3a or 3b
$\Rightarrow$ **1. Mapping defined**

2. Step (2. Transmission)
Options:

    (a) Choose Level 1 for $i_2$
    Choose Level 2 for $i_3$ (free choice if 2a or 2b) => Level 3 for $i_1$ - free choice if 3a or 3b
    (b) Choose Level 1 for $i_3$
    Choose Level 2 for $i_1$ (free choice if 2a or 2b) $\Rightarrow$ Level 3 for $i_2$ - free choice if 3a or 3b

$\Rightarrow$ **2. Mapping defined**

3. Step (3. Transmission)
if (a) in 2. Step
Choose Level 1 for $i_3$
Choose Level 2 for $i_1$ (free choice if 2a or 2b) $\Rightarrow$ Level 3 for $i_2$ - free choice if 3a or 3b if (b) in 2. Step
Choose Level 1 for $i_2$
Choose Level 2 for $i_3$ (free choice if 2a or 2b) $\Rightarrow$ Level 3 for $i_1$ - free choice if 3a or 3b
$\Rightarrow$ **3. Mapping defined**

4. Step (4. Transmission)
Choose Level 1 for one bit out of $i_1$, $i_2$ or $i_3$
Choose Level 2 for one out of two remaining bits with following restrictions

(a1) if in one of the previous transmission 2a was used for this bit then use 2b
(a2) if in one of the previous transmission 2b was used for this bit then use 2a

=> Level 3 for remaining bit with following restrictions

(b1) if in one of the previous transmission 3a was used for this bit then use 3b
(b2) if in one of the previous transmission 3b was used for this bit then use 3a

⇒ **4. Mapping defined**

5. Step (5. Transmission)
Choose Level 1 for one out of two bits not having Level 1 in 4. Step
Choose Level 2 for one out of two bits not having Level 2 in 4. Step with following restrictions

(a1) if in one of the previous transmission 2a was used for this bit then use 2b
(a2) if in one of the previous transmission 2b was used for this bit then use 2a

=> Level 3 for remaining bit with following restrictions

(b1) if in one of the previous transmission 3a was used for this bit then use 3b
(b2) if in one of the previous transmission 3b was used for this bit then use 3a

⇒ **5. Mapping defined**

6. Step (6. Transmission)
Choose Level 1 for bit not having Level 1 in 4. Step and 5. Step
Choose Level 2 for bit not having Level 2 in 4. Step and 5. Step with following restrictions

(a1) if in one of the previous transmission 2a was used for this bit then use 2b
(a2) if in one of the previous transmission 2b was used for this bit then use 2a

=> Level 3 for remaining bit with following restrictions

(b1) if in one of the previous transmission 3a was used for this bit then use 3b
(b2) if in one of the previous transmission 3b was used for this bit then use 3a

⇒ **6. Mapping defined**

7. Step (7., 13., 19., ... Transmission)
Choose one out of 6 defined mappings

8. Step (8., 14., 20., ... Transmission)
Choose one out of 6 defined mappings except

(a) the mapping used in 7. Step (previous transmission)
(b) the mapping giving Level 1 reliability to the same bit as in previous transmission

9. Step (9., 15., 21., ... Transmission)
Choose one out of 6 defined mappings with giving Level 1 reliability to the bit not having Level 1 in last 2 transmissions

10. Step (10., 16., 22., ... Transmission)
Choose one out of 3 remaining mappings not used in last 3 transmissions

11. Step (11., 17., 23., ... Transmission)
Choose one out of 2 remaining mappings not used in last 4 transmissions

12. Step (12., 18., 24., ... Transmission)
Choose remaining mapping not used in last 5 transmissions

13. Step
Go to 7. Step

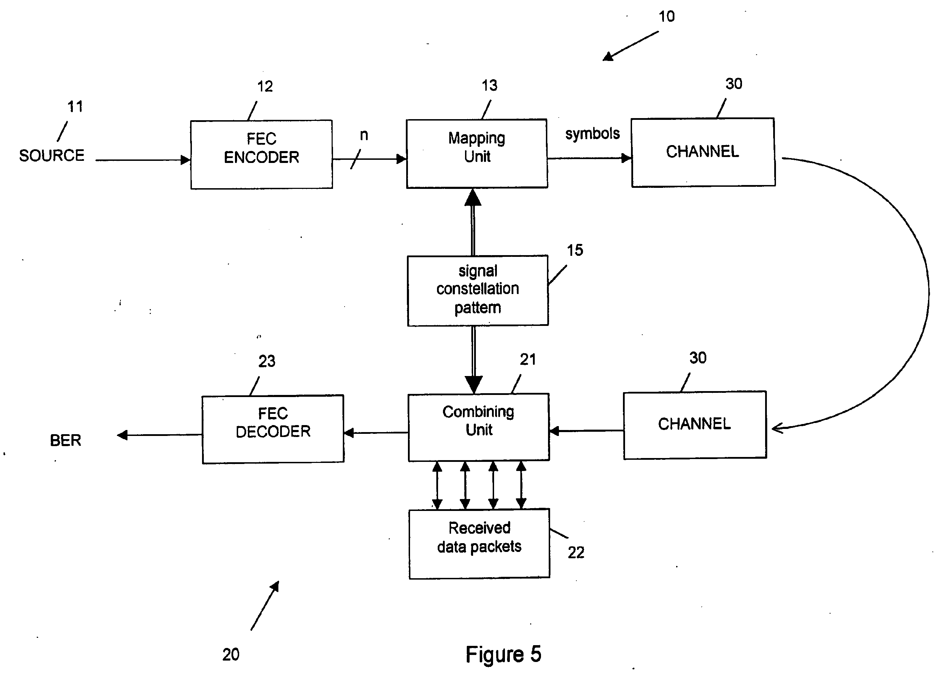

Figure 5 shows an exemplary embodiment of a communication system to which the present invention can be applied. More specifically, the communication system comprises a transmitter 10 and a receiver 20 which communicate through a channel 30 which can either be wire-bound or wireless, i.e. an air interface. From a data source 11, data packets are supplied to a FEC encoder 12, where redundancy bits are added to correct errors. The n bits output from the FEC decoder are subsequently supplied to a mapping unit 13 acting as a modulator to output symbols formed according to the applied modulation scheme stored as a constellation pattern in a table 15. Upon transmission over the channel 30, the receiver 20 checks the received data packets, for example, by means of a cyclic redundancy check (CRC) for correctness.

## Claims

1. A transmission apparatus using a constellation rearrangement, said apparatus comprising:

   a transmission section (10) adapted to transmit a data arranged in a first 16 QAM constellation pattern in a first transmission, and adapted to retransmit all or a part of said data arranged in a second 16 QAM constellation pattern in a retransmission,

   **characterized in that**
   said transmission section is adapted to use one constellation pattern of the first and second 16 QAM constellation patterns, generated by, with respect to an assigned bit sequence ($i_1q_1i_2q_2$) in a symbol, exchanging the positions of the first bit $i_1$ and third bit $i_2$ as well as that of the second bit $q_1$ and fourth bit $q_2$.

2. A transmission apparatus using a constellation rearrangement, said apparatus comprising:

   a transmission section (10) adapted to transmit a data arranged in a first 16 QAM constellation pattern in a first transmission, and adapted to retransmit all or a part of said data arranged in a second 16 QAM constellation pattern in a retransmission,

   **characterized in that**
   said transmission section (10) is adapted to use one constellation pattern of the first and second 16 QAM constellation patterns generated by, with respect to an assigned bit sequence ($i_1q_1i_2q_2$) in a symbol, inverting the third bit $i_2$ and fourth bit $q_2$ respectively.

3. The transmission apparatus according to claim 1 or 2,
   wherein said second 16 QAM constellation pattern is different from said first 16 QAM constellation pattern with respect to a reliability of a bit that is mapped onto a symbol.

4. The transmission apparatus according to one of claims 1-3,
   wherein the transmission section (10) is adapted to use said second constellation pattern generated by rearranging an assigned bit sequence ($i_1q_1i_2q_2$) of a symbol in said first constellation pattern.

5. A transmission method comprising:

   transmitting a data arranged in a first 16 QAM constellation pattern in a first transmission, and retransmitting all or a part of said data arranged in a second 16 QAM constellation pattern in a retransmission,

   **characterized in that**
   one constellation pattern of the first and second 16 QAM constellation patterns is generated by, with respect to an

assigned bit sequence ($i_1q_1i_2q_2$) in a symbol, exchanging the positions of the first bit $i_1$ and third bit $i_2$ as well as that of the second bit $q_1$ and fourth bit $q_2$.

6. A transmission method comprising:

transmitting a data arranged in a first 16 QAM constellation pattern in a first transmission, and retransmitting all or a part of said data arranged in a second 16 QAM constellation pattern in a retransmission,

**characterized in that**
one constellation pattern of the first and second 16QAM constellation patterns is generated by, with respect to an assigned bit sequence ($i_1q_1i_2q_2$) in a symbol, inverting the third bit $i_2$ and fourth bit $q_2$ respectively.

7. The transmission method according to claim 5 or 6, wherein said second 16 QAM constellation pattern is different from said first 16 QAM constellation pattern with respect to a reliability of a bit that is mapped onto a symbol.

8. The transmission method according to one of claim 5-7, wherein said transmitting apparatus adapted to use second constellation pattern generated by rearranging an assigned bit sequence ($i_1q_1i_2q_2$) of a symbol in said first constellation pattern.

9. A communication system comprising:

a transmitting apparatus (10) that is adapted to:

transmit a data arranged in a first 16 QAM constellation pattern in a first transmission, and retransmits all or a part of said data arranged in a second 16 QAM constellation pattern in a retransmission,

**characterized in that**
said transmitting apparatus (10) is adapted to use one constellation pattern of the first and second 16 QAM constellation patterns generated by, with respect to an assigned bit sequence ($i_1q_1i_2q_2$) in a symbol, exchanging the positions of the first bit $i_1$ and third bit $i_2$ as well as that of the second bit $q_1$ and fourth bit $q_2$; and
a receiving apparatus arranged to receive said data transmitted in said first transmission and retransmitted in said retransmission.

10. A communication system comprising:

a transmitting apparatus (10) that is adapted to transmit a data arranged in a first 16 QAM constellation pattern in a first transmission, and retransmit all or a part of said data arranged in a second 16 QAM constellation pattern in a retransmission,

**characterized in that**
said transmission apparatus (10) is adapted to use one constellation pattern of the first and second 16QAM constellation patterns generated by, with respect to an assigned bit sequence ($i_1q_1i_2q_2$) in a symbol, inverting the third bit $i_2$ and fourth bit $q_2$ respectively; and
a receiving apparatus (20) arranged to receive said data transmitted in said first transmission and in said retransmission.

11. The transmission apparatus according to one of claims 1-4, further comprising a constellation table (15) that stores a plurality of constellation patterns including said first constellation pattern and said second constellation pattern.

12. A reception apparatus comprising:

a reception section (20) adapted to (i) receive data modulated and transmitted using a first constellation pattern, and adapted to (ii) receive all or a part of said data modulated and retransmitted using a second constellation pattern, and
a demodulating section adapted to demodulate said data, received in operation (i), using said first constellation pattern and adapted to demodulate said all or a part of said data, received in operation (ii), using said second constellation pattern,

**characterized in that**
said demodulating section (20) is adapted to use one constellation pattern of the first and second 16 QAM constellation patterns generated by, with respect to an assigned bit sequence ($i_1q_1i_2q_2$) in a symbol, exchanging the positions of the first bit $i_1$ and third bit $i_2$ as well as that of the second bit $q_1$ and fourth bit $q_2$.

13. A reception apparatus comprising:

a reception section (20) adapted to (i) receive data modulated and transmitted using a first constellation pattern, and adapted to (ii) receive all or a part of said data modulated and retransmitted using a second constellation pattern, and
a demodulating section (20) adapted to demodulate said data, received in operation (i), using said first constellation pattern and adapted to demodulate said all or a part of said data, received in operation (ii), using said second constellation pattern,

**characterized in that**
said demodulating section (20) is adapted to use one constellation pattern of the first and second 16QAM constellation patterns generated by, with respect to an assigned bit sequence ($i_1q_1i_2q_2$) in a symbol, inverting the third bit $i_2$ and fourth bit $q_2$ respectively.

14. The reception apparatus according to claim 12 or 13, wherein said second 16 QAM constellation pattern is different from said first 16 QAM constellation pattern with respect to a reliability of a bit that is mapped onto a symbol.

15. The reception apparatus according to one of claim 12-14, wherein said demodulating section (20) is adapted to use said second constellation pattern generated by rearranging an assigned bit sequence ($i_1q_1i_2q_2$) of a symbol in said first constellation pattern.

16. The reception apparatus according to one of claims 12-15, further comprising a constellation table (15) that stores a plurality of constellation patterns including said first constellation pattern and said second constellation pattern.

**Patentansprüche**

1. Übertragungsvorrichtung, die eine Konstellationsumordnung verwendet, wobei die Vorrichtung umfasst:

einen Übertragungsabschnitt (10), eingerichtet, um Daten, die in einem ersten 16-QAM-Konstellationsmuster angeordnet sind, in einer ersten Übertragung zu übertragen, und eingerichtet, um alle oder einen Teil der Daten, in einem zweiten 16-QAM-Konstellationsmuster angeordnet, in einer Wiederholungsübertragung erneut zu übertragen,

**dadurch gekennzeichnet, dass**
der Übertragungsabschnitt eingerichtet ist, um ein Konstellationsmuster des ersten und des zweiten 16-QAM-Konstellationsmusters zu verwenden, das dadurch erzeugt wird, dass in Bezug auf eine zugewiesene Bitsequenz ($i_1q_1i_2q_2$) in einem Symbol die Positionen des ersten Bits $i_1$ und des dritten Bits $i_2$ sowie die des zweiten Bits $q_1$ und des vierten Bits $q_2$ ausgetauscht werden.

2. Übertragungsvorrichtung, die eine Konstellationsumordnung verwendet, wobei die Vorrichtung umfasst:

einen Übertragungsabschnitt (10), eingerichtet, um Daten, die in einem ersten 16-QAM-Konstellationsmuster angeordnet sind, zu übertragen, und eingerichtet, um alle oder einen Teil der Daten, in einem zweiten 16-QAM-Konstellationsmuster angeordnet, in einer Wiederholungsübertragung erneut zu übertragen,

**dadurch gekennzeichnet, dass**
der Übertragungsabschnitt (10) eingerichtet ist, um ein Konstellationsmuster des ersten und des zweiten 16-QAM-Konstellationsmusters zu verwenden, das dadurch erzeugt wird, dass in Bezug auf eine zugewiesene Bitsequenz ($i_1q_1i_2q_2$) in einem Symbol jeweils das dritte Bit $i_2$ und das vierte Bit $q_2$ invertiert werden.

3. Übertragungsvorrichtung nach Anspruch 1 oder 2,
wobei das zweite 16-QAM-Konstellationsmuster in Bezug auf eine Zuverlässigkeit eines Bits, das auf einem Symbol abgebildet ist, von dem ersten 16-QAM-Konstellationsmuster verschieden ist.

4. Übertragungsvorrichtung nach einem der Ansprüche 1 bis 3,
wobei der Übertragungsabschnitt (10) eingerichtet ist, um das zweite Konstellationsmuster zu verwenden, das durch Umordnung einer zugewiesenen Bitsequenz ($i_1 q_1 i_2 q_2$) eines Symbols in dem ersten Konstellationsmuster erzeugt wird.

5. Übertragungsverfahren, das umfasst:

Übertragen von Daten, die in einem ersten 16-QAM-Konstellationsmuster angeordnet sind, in einer ersten Übertragung und erneutes Übertragen von allen oder einem Teil der Daten, angeordnet in einem zweiten 16-QAM-Konstellationsmuster, in einer Wiederholungsübertragung,

**dadurch gekennzeichnet, dass**
ein Konstellationsmuster des ersten und des zweiten 16-QAM-Konstellationsmusters dadurch erzeugt wird, dass in Bezug auf eine zugewiesene Bitsequenz ($i_1 q_1 i_2 q_2$) in einem Symbol die Positionen des ersten Bits $i_1$ und des dritten Bits $i_2$ sowie die des zweiten Bits $q_1$ und des vierten Bits $q_2$ ausgetauscht werden.

6. Übertragungsverfahren, das umfasst:

Übertragen von Daten, die in einem ersten 16-QAM-Konstellationsmuster angeordnet sind, in einer ersten Übertragung und erneutes Übertragen aller oder eines Teils der Daten, angeordnet in einem zweiten 16-QAM-Konstellationsmuster, in einer Wiederholungsübertragung,

**dadurch gekennzeichnet, dass**
ein Konstellationsmuster des ersten und des zweiten 16-QAM-Konstellationsmusters dadurch erzeugt wird, dass in Bezug auf eine zugewiesene Bitsequenz ($i_1 q_1 i_2 q_2$) in einem Symbol jeweils das dritte Bit $i_2$ und das vierte Bit $q_2$ invertiert werden.

7. Übertragungsverfahren nach Anspruch 5 oder 6, wobei das zweite 16-QAM-Konstallationsmuster in Bezug auf eine Zuverlässigkeit eines Bits, das auf einem Symbol abgebildet ist, von dem ersten 16-QAM-Konstellationsmuster verschieden ist.

8. Übertragungsverfahren nach einem der Ansprüche 5 bis 7, wobei die Übertragungseinrichtung eingerichtet ist, um das zweite Konstellationsmuster zu verwenden, das durch Umordnung einer zugewiesenen Bitsequenz ($i_1 q_1 i_2 q_2$) eines Symbols in dem ersten Konstellationsmuster erzeugt wird.

9. Kommunikationssystem, das umfasst:

eine Übertragungsvorrichtung (10), die eingerichtet ist, um:

Daten, die in einem ersten 16-QAM-Konstellationsmuster angeordnet sind, in einer ersten Übertragung zu übertragen und alle oder einen Teil der Daten, in einem zweiten 16-QAM-Konstellationsmuster angeordnet, in einer Wiederholungsübertragung erneut zu übertragen,

**dadurch gekennzeichnet, dass**
die Übertragungsvorrichtung (10) eingerichtet ist, um ein Konstellationsmuster des ersten und des zweiten 16-QAM-Konstellationsmusters zu verwenden, das dadurch erzeugt wird, dass in Bezug auf eine zugewiesene Bitsequenz ($i_1 q_1 i_2 q_2$) in einem Symbol die Positionen des ersten Bits $i_1$ und des dritten Bits $i_2$ sowie die des zweiten Bits $q_1$ und des vierten Bits $q_2$ ausgetauscht werden, und
eine Empfangsvorrichtung, die eingerichtet ist, um die Daten, die in der ersten Übertragung übertragen werden und in der Wiederholungsübertragung erneut übertragen werden, zu empfangen.

10. Kommunikationssystem, das umfasst:

eine Übertragungsvorrichtung (10), die eingerichtet ist, um Daten, die in einem ersten 16-QAM-Konstellationsmuster angeordnet sind, in einer ersten Übertragung zu übertragen und alle oder einen Teil der Daten, in einem zweiten 16-QAM-Konstellationsmuster angeordnet, in einer Wiederholungsübertragung erneut zu übertragen,

**dadurch gekennzeichnet, dass**

die Übertragungsvorrichtung (10) eingerichtet ist, um ein Konstellationsmuster des ersten und des zweiten 16-QAM-Konstellationsmusters zu verwenden, das dadurch erzeugt wird, dass in Bezug auf eine zugewiesene Bitsequenz $(i_1 q_1 i_2 q_2)$ in einem Symbol jeweils das dritte Bit $i_2$ und das vierte Bit $q_2$ invertiert werden, und

eine Empfangsvorrichtung (20) eingerichtet ist, um die Daten, die in der ersten Übertragung übertragen werden und in der Wiederholungsübertragung erneut übertragen werden, zu empfangen.

11. Übertragungsvorrichtung nach einem der Ansprüche 1 bis 4, die des Weiteren eine Konstellationstabelle (15) umfasst, die eine Vielzahl von Konstellationsmustern, einschließlich des ersten Konstellationsmusters und des zweiten Konstellationsmusters, speichert.

12. Empfangsvorrichtung, die umfasst:

eine Empfangsvorrichtung (20), eingerichtet, um (I) Daten, moduliert und übertragen unter Verwendung eines ersten Konstellationsmusters, zu empfangen, und eingerichtet, um (II) alle oder einen Teil der Daten, moduliert und erneut übertragen unter Verwendung eines zweiten Konstellationsmusters, zu empfangen, und einen Demodulationsabschnitt, eingerichtet, um die in Betrieb (I) empfangenen Daten unter Verwendung des ersten Konstellationsmusters zu demodulieren, und eingerichtet, um alle oder einen Teil der in Betrieb (11) empfangenen Daten unter Verwendung des zweiten Konstellationsmusters zu demodulieren,

**dadurch gekennzeichnet, dass**

der Demodulationsabschnitt (20) eingerichtet ist, um ein Konstellationsmuster des ersten und des zweiten 16-QAM-Konstellationsmusters zu verwenden, das dadurch erzeugt wird, dass in Bezug auf eine zugewiesene Bitsequenz $(i_1 q_1 i_2 q_2)$ in einem Symbol die Positionen des ersten Bits $i_1$ und des dritten Bits $i_2$ sowie die des zweiten Bits $q_1$ und des vierten Bits $q_2$ ausgetauscht werden.

13. Empfangsvorrichtung, die umfasst:

einen Empfangsabschnitt (20), eingerichtet, um (I) Daten, moduliert und übertragen unter Verwendung eines ersten Konstellationsmusters, zu empfangen, und eingerichtet, um (II) alle oder ein Teil der Daten, moduliert und erneut übertragen unter Verwendung eines zweiten Konstellationsmusters, zu empfangen, und einen Demodulationsabschnitt (20), eingerichtet, um die in Betrieb (I) empfangenen Daten unter Verwendung des ersten Konstellationsmusters zu demodulieren, und eingerichtet, um alle oder einen Teil der in Betrieb (II) empfangenen Daten unter Verwendung des zweiten Konstellationsmusters zu demodulieren,

**dadurch gekennzeichnet, dass**

der Demodulationsabschnitt (20) eingerichtet ist, um ein Konstellationsmuster des ersten und des zweiten 16-QAM-Konstellationsmusters zu verwenden, das dadurch erzeugt wird, dass in Bezug auf eine zugewiesene Bitsequenz $(i_1 q_1 i_2 q_2)$ in einem Symbol jeweils das dritte Bit $i_2$ und das vierte Bit $q_2$ invertiert werden.

14. Empfangsvorrichtung nach Anspruch 12 oder 13, wobei das zweite 16-QAM-Konstallationsmuster in Bezug auf eine Zuverlässigkeit eines Bits, das auf einem Symbol abgebildet ist, von dem ersten 16-QAM-Konstellationsmuster verschieden ist.

15. Empfangsvorrichtung nach einem der Ansprüche 12 bis 14, wobei der Demodulationsabschnitt (20) eingerichtet ist, um das zweite Konstellationsmuster zu verwenden, das durch Umordnung einer zugewiesenen Bitsequenz $(i_1 q_1 i_2 q_2)$ eines Symbols in dem ersten Konstellationsmuster erzeugt wird.

16. Empfangsvorrichtung nach einem der Ansprüche 12 bis 15, die des Weiteren eine Konstellationstabelle (15) umfasst, die eine Vielzahl von Konstellationsmustern, einschließlich des ersten Konstellationsmusters und des zweiten Konstellationsmusters, speichert.

**Revendications**

1. Dispositif de transmission utilisant un réagencement de constellations, ledit dispositif comprenant :

une section de transmission (10) adaptée pour transmettre des données agencées dans un premier modèle de constellation 16 QAM dans une première transmission, et adaptée pour retransmettre toute ou une partie desdites données agencées dans un deuxième modèle de constellation 16 QAM dans une retransmission,

**caractérisé en ce que**
ladite section de transmission est adaptée pour utiliser un modèle de constellation des premier et deuxième modèles de constellations 16 QAM, généré, par rapport à une séquence de bits attribuée $(i_1q_1i_2q_2)$ dans un symbole, en échangeant les positions du premier bit $i_1$ et du troisième bit $i_2$ aussi bien que celles du deuxième bit $q_1$ et du quatrième bit $q_2$.

2. Dispositif de transmission utilisant un réagencement de constellations, ledit dispositif comprenant :

une section de transmission (10) adaptée pour transmettre des données agencées dans un premier modèle de constellation 16 QAM dans une première transmission, et adaptée pour retransmettre toute ou une partie desdites données agencées dans un deuxième modèle de constellation 16 QAM dans une retransmission.

**caractérisé en ce que**
ladite section de transmission (10) est adaptée pour utiliser un modèle de constellation des premier et deuxième modèles de constellations 16 QAM généré, par rapport à une séquence de bits attribuée $(i_1q_1i_2q_2)$ dans un symbole, en inversant le troisième bit $i_2$ et le quatrième bit $q_2$ respectivement.

3. Dispositif de transmission selon la revendication 1 ou 2,
dans lequel ledit deuxième modèle de constellation 16 QAM est différent dudit premier modèle de constellation 16 QAM par rapport à une fiabilité d'un bit qui est mappé sur un symbole.

4. Dispositif de transmission selon l'une des revendications 1-3,
dans lequel la section de transmission (10) est adaptée pour utiliser ledit deuxième modèle de constellation généré en réagençant une séquence de bits attribuée $(i_1q_1i_2q_2)$ d'un symbole dans ledit premier modèle de constellation.

5. Procédé de transmission comprenant :

transmettre des données agencées dans un premier modèle de constellation 16 QAM dans une première transmission, et retransmettre toute ou une partie desdites données agencées dans un deuxième modèle de constellation 16 QAM dans une retransmission.

**caractérisé en ce que**
un modèle de constellation des premier et deuxième modèles de constellations 16 QAM est généré, par rapport à une séquence de bits attribuée $(i_1q_1i_2q_2)$ dans un symbole, en échangeant les positions du premier bit $i_1$ et du troisième bit $i_2$ aussi bien que celles du deuxième bit $q_1$ et du quatrième bit $q_2$.

6. Procédé de transmission comprenant :

transmettre des données agencées dans un premier modèle de constellation 16 QAM dans une première transmission, et retransmettre toute ou une partie desdites données agencées dans un deuxième modèle de constellation 16 QAM dans une retransmission,

**caractérisé en ce que**
un modèle de constellation des premier et deuxième modèles de constellations 16 QAM est généré, par rapport à une séquence de bits attribuée $(i_1q_1i_2q_2)$ dans un symbole, en inversant le troisième bit $i_2$ et le quatrième bit $q_2$ respectivement.

7. Procédé de transmission selon la revendication 5 ou 6, dans lequel ledit deuxième modèle de constellation 16 QAM est différent dudit premier modèle de constellation 16 QAM par rapport à une fiabilité d'un bit qui est mappé sur un symbole.

8. Procédé de transmission selon l'une des revendications 5-7, dans lequel ledit dispositif de transmission est adapté pour utiliser un deuxième modèle de constellation généré en réagençant une séquence de bits attribuée $(i_1q_1i_2q_2)$ d'un symbole dans ledit premier modèle de constellation.

**9.** Système de communication comprenant:

un dispositif de transmission (10) qui est adapté pour:

transmettre des données agencées dans un premier modèle de constellation 16 QAM dans une première transmission, et retransmettre toute ou une partie desdites données agencées dans un deuxième modèle de constellation 16 QAM dans une retransmission,

**caractérisé en ce que**
ledit dispositif de transmission (10) est adapté pour utiliser un modèle de constellation des premier et deuxième modèles de constellations 16 QAM générés, par rapport à une séquence de bits attribuée $(i_1 q_1 i_2 q_2)$ dans un symbole, en échangeant les positions du premier bit $i_1$ et du troisième bit $i_2$ aussi bien que celles du deuxième bit $q_1$ et du quatrième bit $q_2$ ; et
un dispositif de réception agencé pour recevoir lesdites données transmises dans ladite première transmission et retransmises dans ladite retransmission.

**10.** Système de communication comprenant :

un dispositif de transmission (10) qui est adapté pour transmettre des données agencées dans un premier modèle de constellation 16 QAM dans une première transmission, et retransmettre toute ou une partie desdites données agencées dans un deuxième modèle de constellation 16 QAM dans une retransmission,

**caractérisé en ce que**
ledit dispositif de transmission (10) est adapté pour utiliser un modèle de constellation des premier et deuxième modèles de constellations 16 QAM généré, par rapport à une séquence de bits attribuée $(i_1 q_1 i_2 q_2)$ dans un symbole, en inversant le troisième bit $i_2$ et le quatrième bit $q_2$ respectivement ; et
un dispositif de réception (20) agencé pour recevoir lesdites données transmises dans ladite première transmission et dans ladite retransmission.

**11.** Dispositif de transmission selon l'une des revendications 1-4, comprenant en plus un tableau de constellations (15) qui stocke une pluralité de modèles de constellations incluant ledit premier modèle de constellation et ledit deuxième modèle de constellation.

**12.** Dispositif de réception comprenant :

une section de réception (20) adaptée pour (i) recevoir des données modulées et transmises en utilisant un premier modèle de constellation, et adaptée pour (ii) recevoir tout ou une partie desdites données modulées et retransmises en utilisant un deuxième modèle de constellation, et
une section de démodulation adaptée pour démoduler lesdites données, reçues dans l'opération (i), en utilisant ledit premier modèle de constellation et adaptée pour démoduler lesdites toutes ou une partie desdites données, reçues dans l'opération (ii), en utilisant ledit deuxième modèle de constellation,

**caractérisé en ce que**
ladite section de démodulation (20) est adaptée pour utiliser un modèle de constellation des premier et deuxième modèles de constellations 16 QAM généré, par rapport à une séquence de bits attribuée $(i_1 q_1 i_2 q_2)$ dans un symbole, en échangeant les positions du premier bit $i_1$ et du troisième bit $i_2$ aussi bien que celles du deuxième bit $q_1$ et du quatrième bit $q_2$.

**13.** Dispositif de réception comprenant :

une section de réception (20) adaptée pour (i) recevoir des données modulées et transmises en utilisant un premier modèle de constellation, et adaptée pour (ii) recevoir toutes ou une partie desdites données modulées et retransmises en utilisant un deuxième modèle de constellation, et
une section de démodulation (20) adaptée pour démoduler lesdites données, reçues dans l'opération (i), en utilisant ledit premier modèle de constellation et adaptée pour démoduler lesdites toutes ou une partie desdites données, reçues dans l'opération (ii), en utilisant ledit deuxième modèle de constellation,

**caractérisé en ce que**

ladite section de démodulation (20) est adaptée pour utiliser un modèle de constellation des premier et deuxième modèles de constellations 16 QAM généré, par rapport à une séquence de bits attribuée ($i_1q_1i_2q_2$) dans un symbole, en inversant le troisième bit $i_2$ et le quatrième bit $q_2$ respectivement.

**14.** Dispositif de réception selon la revendication 12 ou 13, dans lequel ledit deuxième modèle de constellation 16 QAM est différent dudit premier modèle de constellation 16 QAM par rapport à une fiabilité d'un bit qui est mappé sur un symbole.

**15.** Dispositif de réception selon l'une des revendications 12-14, dans lequel ladite section de démodulation (20) est adaptée pour utiliser ledit deuxième modèle de constellation généré en réagençant une séquence de bits attribuée ($i_1q_1i_2q_2$) d'un symbole dans ledit premier modèle de constellation.

**16.** Dispositif de réception selon l'une des revendications 12-15, comprenant en plus un tableau de constellations (15) qui stocke une pluralité de modèles de constellations incluant ledit premier modèle de constellation et ledit deuxième modèle de constellation.

Figure 1

EP 1 427 128 B1

## Constellation 1

$i_1$

$i_2$      $i_2$

Im

| 1011 | 1001 | 0001 | 0011 |

$q_2$ ● ● ● ●

| 1010 | 1000 | 0000 | 0010 |

● ● ● ● — Re

| 1110 | 1100 | 0100 | 0110 |
● ● ● ●

$q_1$

$q_2$ ● ● ● ●

| 1111 | 1101 | 0101 | 0111 |

## Constellation 2

$i_2$

$i_1$

Im

| 0010 | 1010 | 1000 | 0000 |

● ● ● ●

| 0110 | 1110 | 1100 | 0100 |

$q_1$ ● ● ● ● — Re

| 0111 | 1111 | 1101 | 0101 |
● ● ● ●

$q_2$

● ● ● ●

| 0011 | 1011 | 1001 | 0001 |

Figure 2 a

Figure 2 b

Figure 3

Figure 4 a

Figure 4 b

EP 1 427 128 B1

## Constellation 5

## Constellation 6

Figure 4 c

Figure 5

Figure 6

EP 1 427 128 B1